# DEMANDE DE BREVET EUROPEEN

(11) **EP 1 279 337 A2**
(43) Date de publication de la demande: **29.01.2003**
(21) Numéro de dépôt: 02352015.8
(22) Date de dépôt: 24.07.2002
(51) Int. Cl.: A23B 4/00

(54) **Procédé de cuisson de crustacés et/ou coquillages en emballage et emballage à cet effet**

(30) Priorité: 24.07.2001 FR 0109837
(71) Demandeur: Crusta d'Oc Z.I. Buconis, 32600 L'Isle Jourdain (FR)
(72) Inventeur: Nguyen, Franck, 31530 Sainte Livrade (FR)
(74) Mandataire: Rinuy, Santarelli

(57) **Abrégé**

Dans ce procédé les crustacés et/ou coquillages sont pêchés, conditionnés et surgelés puis ultérieurement décongelés, cuits et rincés.

Les crustacés et/ou coquillages sont conditionnés dans un emballage ou similaire résistant à la fois aux basses températures et aux hautes températures subies par les crustacés et/ou coquillages et les crustacés et/ou coquillages restent dans leur emballage au cours de leur cuisson et de leur distribution.

Cet emballage se présente par exemple sous la forme d'une barquette comportant un fond et une paroi latérale s'étendant à la périphérie de celui-ci. Le fond est muni de reliefs de telle sorte que le fond présente des zones en relief et des zones en creux, et des trous sont réalisés dans la majorité des zones en creux du fond.

## Description

La présente invention concerne un procédé de cuisson de crustacés, coquillages ou similaires ainsi qu'un emballage mis en oeuvre dans ce procédé.

La présente invention concerne plus particulièrement les crustacés et coquillages cuits que l'on trouve chez les poissonniers et aux rayons frais des supermarchés et hypermarchés. Actuellement, ces crustacés, le plus souvent des crevettes ou langoustines, sont pêchés au large ou dans des bassins d'élevage. Sur le lieu de pêche, elles sont rapidement surgelées et conditionnées. Le conditionnement se fait dans des boîtes en carton, elles-mêmes empilées dans une caisse, également en carton, de plus grande taille. Ces caisses sont alors transportées, en respectant la chaîne du froid, jusqu'au lieu de cuisson. Les crustacés et/ou coquillages sont alors sortis de leur emballage et versés sur un tapis roulant les conduisant au travers plusieurs postes de traitement tels : décongélation, cuisson, rinçage et reconditionnement.

Ce procédé de traitement des crustacés en vue de leur cuisson présente quelques inconvénients. Lorsque les crustacés ou coquillages sont versés, surgelés, sur un tapis roulant, il arrive fréquemment, notamment pour les crustacés, que certains cassent. Il faut alors retirer ces crustacés cassés qui ne sont pas appréciés des consommateurs. Ceci entraîne des pertes non négligeables de crustacés mais aussi des pertes de temps pour retirer manuellement les crustacés abîmés.

En outre, les boîtes de conditionnement des crustacés et/ou coquillages surgelés sont perdues. Elles sont réalisées en carton mais recouvertes de paraffine ce qui rend leur recyclage difficile et économiquement inintéressant.

La présente invention a alors pour but de fournir un nouveau procédé de traitement de crustacés et/ou coquillages en vue de leur cuisson afin de limiter notamment les pertes de crustacés et/ou coquillages constatées avec les procédés utilisés actuellement.

A cet effet, elle propose un procédé de traitement de crustacés et/ou de coquillages en vue de leur cuisson, à partir de crustacés et/ou coquillages pêchés et surgelés, dans lequel les crustacés et/ou coquillages sont pêchés, conditionnés et surgelés puis ultérieurement décongelés, cuits et rincés.

Selon l'invention, les crustacés et/ou coquillages sont conditionnés dans un emballage perforé ou similaire résistant à la fois aux basses températures et aux hautes températures subies par les crustacés et/ou coquillages et les crustacés et/ou coquillages restent dans leur emballage au cours de leur cuisson.

De cette manière, la cuisson des crustacés et/ou coquillages peut être optimisée. Il est inutile de manipuler les crustacés et/ou coquillages avant la cuisson ni après celle-ci. Le risque de casse des produits est donc très limité. De plus, le produit restant dans son emballage d'origine, il n'y a plus de problème du recyclage des emballages d'origine utilisés dans les procédés de l'art antérieur. Le procédé ci-dessus présente aussi l'avantage de faciliter grandement la traçabilité des produits. En effet, les produits restant dans le même emballage depuis le lieu de pêche jusqu'en fin de cuisson et même parfois jusque chez le consommateur, l'emballage peut être marqué d'un signe distinctif (code barres ou autre) et être suivi tout au long de son parcours. L'absence de manipulation permet également de plus facilement garantir l'hygiène du produit tout au long de la chaîne de traitement.

Avantageusement, l'emballage ou similaire dans lequel les crustacés et/ou coquillages pêchés sont conditionnés et cuits est aussi utilisé pour la distribution et la vente au consommateur de ces produits. Ceci permet une encore meilleure traçabilité et garantit une excellente hygiène jusqu'au consommateur final.

La décongélation et la cuisson des crustacés et/ou coquillages sont réalisées par exemple par ruissellement d'eau chaude, ou par passage dans un four à vapeur ou dans une cellule de pulvérisation d'un fluide thermique sous forme gazeuse et/ou liquide ou encore par passage dans un four à micro-ondes.

Afin d'éviter des problèmes de stagnation d'eau, ou d'autres liquides, les emballages sont placés avantageusement sur un tapis de convoyeur ajouré.

Il peut être prévu qu'après la cuisson les crustacés et/ou coquillages soient refroidis par aspersion d'une saumure.

Lorsque l'emballage contenant les crustacés et/ou coquillages cuits est destiné aussi à servir de conditionnement pour la vente de ces crustacés et/ou coquillages, le procédé selon l'invention comporte éventuellement en outre une étape de pesage des crustacés et/ou coquillages cuits et refroidis et une étape d'emballage sous atmosphère contrôlée dans un étui en matière synthétique.

La présente invention concerne aussi une barquette destinée à contenir des crustacés et/ou coquillages comportant un fond et une paroi latérale s'étendant à la périphérie de celui-ci, le fond étant muni de reliefs de telle sorte que le fond présente des zones en relief et des zones en creux, et des trous sont réalisés dans la majorité des zones en creux du fond.

Selon l'invention, cette barquette est réalisée dans une matière synthétique pouvant passer de -20°C à +70°C ou inversement sans déformation sensible.

Une telle barquette est adaptée à un procédé de traitement de crustacés et/ou coquillages tel que décrit ci-dessus. Les trous réalisés sont de préférence assez grands (diamètre supérieur ou égal à 5 mm) pour garantir un bon écoulement d'eau (ou similaire) se trouvant dans la barquette. Le matériau utilisé est par exemple un polypropylène rigide. L'épaisseur de la feuille de polypropylène utilisée pour réaliser une barquette selon l'invention est avantageusement comprise entre 0,5 et 1,5 mm, par exemple environ 1 mm.

Dans une forme de réalisation avantageuse, les reliefs présentent des formes de pointes reliées entre elles par des nervures. Ainsi, le produit se trouvant dans la barquette ne repose pas directement sur le fond de celle-ci et l'écoulement de liquide par les trous du fond est facilité.

On peut prévoir que la paroi latérale présente à son extrémité libre opposée au fond un rebord s'étendant dans un plan sensiblement parallèle au fond. Cette caractéristique est pratique lorsque l'on souhaite empiler des barquettes les unes sur les autres. Ce rebord peut aussi être utilisé pour la manipulation automatisée, à l'aide d'un robot, de la barquette. La forme du rebord est alors avantageusement adaptée à une préhension mécanique.

Une forme de réalisation préférée prévoit qu'en vue de dessus, la barquette présente une forme rectangulaire avec deux axes médians perpendiculaires, et que la barquette est symétrique par rapport à l'un des axes médians mais pas par rapport à l'autre axe médian. Cette forme de réalisation permet d'avoir des barquettes gerbables lorsqu'une barquette est orientée par rapport à l'autre d'une certaine manière et d'empiler les barquettes les unes au-dessus des autres dans une orientation inverse.

Pour gagner de la place avant utilisation des barquette, la paroi latérale est avantageusement légèrement évasée rendant ainsi la barquette gerbable.

La présente invention concerne aussi une barquette pour laquelle le motif formé par les zones en relief et les zones en creux est sensiblement la répétition plusieurs fois d'un même motif unitaire. Une telle barquette peut alors accueillir plusieurs barquettes ne présentant qu'un seul motif unitaire. L'utilisation d'une telle barquette de plus grande taille permet de faciliter la manipulation des barquettes.

La présente invention concerne également un ensemble de barquettes, caractérisé en ce qu'une première barquette est une barquette présentant une répétition de plusieurs motifs unitaires de zones en relief et en creux, en ce que les autres barquettes sont des barquettes telles que décrites ci-dessus et dont le motif formé par les zones en relief et les zones en creux correspond sensiblement au motif unitaire de la première barquette, et en ce que les trous réalisés dans les zones en creux du fond de la première barquette coïncident avec les trous en creux des autres barquettes lorsque celles-ci prennent place dans la première barquette.

Les autres détails et avantages de la présente invention ressortiront mieux de la description qui suit, faite en référence au dessin schématique annexé sur lequel :
La figure 1 illustre schématiquement une chaîne de traitement de crustacés,
La figure 2 est une vue de dessus d'une barquette utilisée pour l'emballage de crevettes,
Les figure 3 et figure 4 sont chacune une vue de côté de la barquette représentée sur la figure 2,
La figure 5 est une vue de dessus, à échelle réduite par rapport aux figures 2 à 4, d'une autre barquette selon l'invention, et
La figure 6 est une vue en perspective de la barquette de la figure 5.

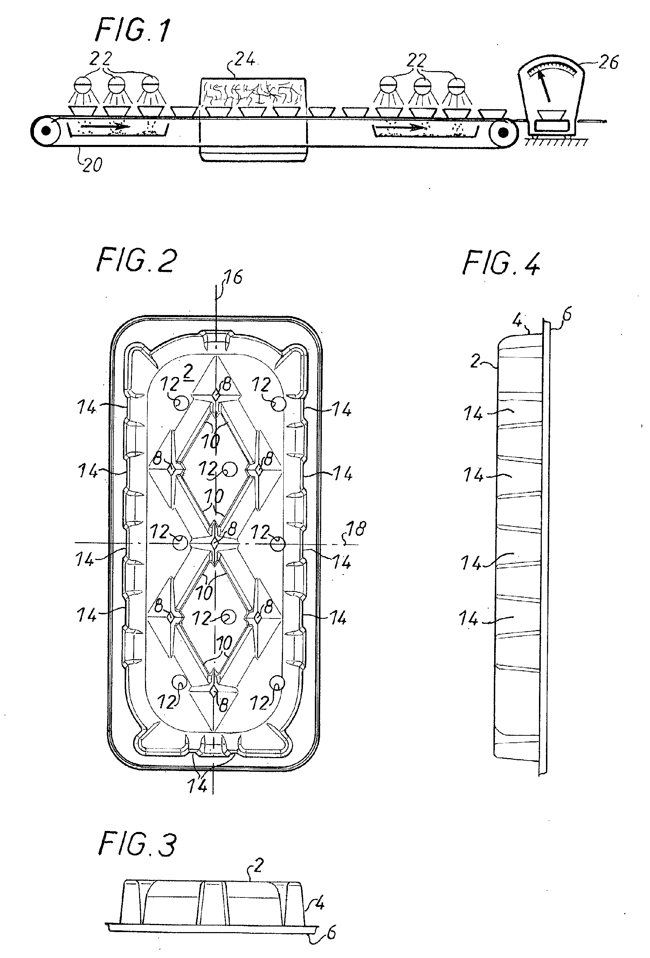

Les figures 2 à 4 montrent un exemple de barquette selon l'invention. La barquette représentée comporte un fond 2 ainsi qu'une paroi latérale 4 s'étendant à la périphérie du fond 2, sensiblement perpendiculairement au plan de ce fond. Le bord libre de la paroi latérale 4, opposé au fond 2, comporte un rebord 6 facilitant la préhension de la barquette et créant une surface sensiblement parallèle au fond 2.

Cette barquette est réalisée en matière synthétique. Cette matière synthétique est choisie pour résister à de fortes variations de température. Cette barquette doit pouvoir être surgelée à environ -30°C et passer dans un four de cuisson à la vapeur aux environs de 110°C sans subir de déformation sensible. Le matériau choisi appartient par exemple à la famille des polypropylènes. Pour avoir une barquette rigide, l'épaisseur de matériau utilisée est par exemple comprise entre 0,5 et 1,5 mm, par exemple 0,9 mm.

Le fond 2 est de forme générale sensiblement plane comportant des reliefs s'étendant dans le même sens que la paroi latérale 4. Dans la forme de réalisation représentée, les reliefs se présentent sous forme de pics 8 et de nervures 10. En vue de dessus, les pics 8 présentent une forme sensiblement étoilée à quatre branches. Les pics 8 sont disposés de manière à former les sommets de losanges et les nervures 10 relient à chaque fois deux pics 8 voisins en formant ainsi les côtés de ces losanges.

Par contraste des parties en relief 8 et 10, les parties sensiblement planes non déformées du fond 2 apparaissent en creux. Chaque zone en creux du fond 2 est munie d'un trou 12. Le diamètre de ce trou est assez important pour permettre un bon écoulement de tout le liquide se trouvant dans la barquette et éviter sa stagnation. Le diamètre de ce trou ne doit toutefois pas permettre le passage d'un crustacé ou d'un coquillage destiné à être conditionné dans cette barquette. Pour des crustacés, il faut également éviter que des parties de ceux-ci, par exemple la tête ou la queue, ne puissent passer à travers les trous 12. Un exemple de diamètre D pour une barquette destinée à contenir des crevettes est D = 8 mm.

La paroi latérale 4 comporte quelques nervures 14 destinées à la rigidifier. La barquette est de forme générale rectangulaire. Sur la figure 2, on a représenté l'axe médian longitudinal 16 et l'axe médian transversal 18 de cette barquette. La paroi latérale 4 est symétrique par rapport à l'axe médian longitudinal 16 mais n'est pas symétrique par rapport à l'axe médian transversal 18. De cette manière, la paroi latérale 4 étant légèrement évasée vers le haut, deux barquettes identiques sont gerbables lorsqu'elles sont orientées de la même manière mais lorsqu'une barquette est pivotée de 180°, autour d'un axe sensiblement perpendiculaire au plan de la figure 2, une barquette vient reposer sur l'autre barquette.

Grâce à cette dissymétrie, il est possible de gerber des barquettes vides par contre, lorsque ces barquettes sont pleines, elles peuvent être empilées les unes sur les autres sans venir prendre appui sur les produits se trouvant à l'intérieur des barquettes. Ainsi, dans une pile de barquettes, les produits, par exemple des crevettes, conditionnées dans la barquette inférieure ne sont pas plus tassés que ceux se trouvant dans la barquette supérieure.

Ici, la présence d'un rebord 6 formant une surface sensiblement plane parallèle au fond 2 permet d'avoir un bon appui lorsque deux barquettes sont empilées.

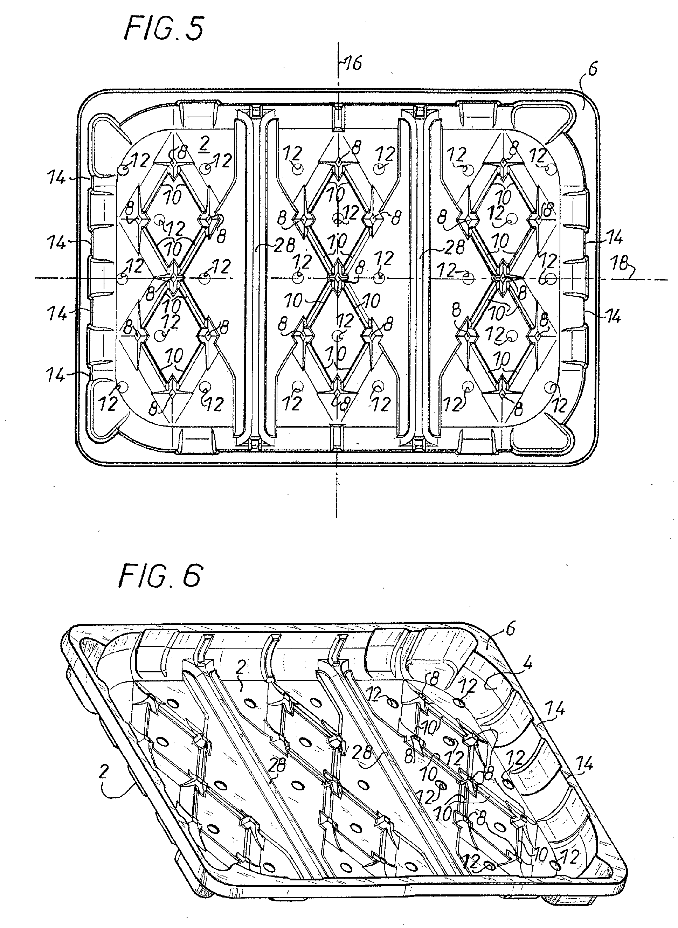

La barquette représentée sur les figures 5 et 6 reprend les mêmes caractéristiques que la barquette des figures 2 à 4. De ce fait, les éléments semblables de cette nouvelle barquette reprendront les mêmes références que ceux de la barquette des figures 2 à 4.

On retrouve ainsi dans la barquette des figures 5 et 6 un fond 2 entouré d'une paroi latérale 4 qui présente un rebord 6. L'épaisseur du matériau utilisé pour réaliser cette barquette est assez importante pour donner de la rigidité à cette barquette. Cette épaisseur est par exemple de 0,9 mm comme pour la barquette décrite en référence aux figures 2 à 4. Le matériau utilisé est également en polypropylène par exemple, pouvant résister sans déformation sensible à une forte variation de température. Dans le fond 2 se trouvent des pics 8 et des nervures 10. Les zones en creux du fond 2 sont également munies de trous 12. La paroi latérale 4 présente des nervures 14. Cette barquette présente aussi la caractéristique de pouvoir coopérer avec une autre barquette identique de manière venir soit s'emboîter dans cette autre barquette soit s'empiler sur celle-ci sans tasser les produits contenus dans la barquette inférieure. En effet, la barquette représentée sur les figures 5 et 6 présente, de même que la première barquette décrite ci-dessus, un axe médian longitudinal 16 et un axe médian transversal 18. Ici aussi cette barquette est symétrique par rapport à l'axe médian longitudinal 16 et n'est pas symétrique par rapport à l'axe médian transversal 18.

Cette barquette (figures 5 et 6) est destinée à pouvoir accueillir trois barquettes telles celle représentée sur les figures 2 à 4. Dans la suite du texte, une barquette telle celle représentée sur les figures 2 à 4 sera qualifiée de petite barquette tandis qu'une barquette telle celle représentée sur les figures 5 et 6 sera qualifiée de grande barquette. Ainsi la largeur d'une grande barquette correspond sensiblement à la longueur d'une petite barquette tandis que la longueur de cette grande barquette correspond à trois fois la largeur d'une petite barquette.

Si l'on considère que le motif créé par les pics et les nervures d'une petite barquette forme un motif de base, le motif créé par les pics et les nervures d'une grande barquette correspond sensiblement à la répétition de trois fois le motif de base avec un pas correspondant à la largeur d'une petite barquette. Chaque motif de base réalisé sur le fond 2 de la grande barquette est séparé ici par une nervure 28 d'un motif de base voisin.

Le motif des trous 12 réalisés dans les petites barquettes se retrouve également dans les grandes barquettes. De cette manière, il est possible d'utiliser un seul et même outil pour faire les trous 12 dans les petites et les grandes barquettes. Ceci entraîne une diminution sensible du prix de revient des barquettes. En outre, le fait d'avoir le même motif pour les trous des petites barquettes que pour une grande barquette permet de faire coïncider les trous d'une petite barquette lorsqu'elle est disposée dans une grande barquette. L'écoulement du liquide se trouvant dans les petites barquettes en est ainsi facilité.

Dans la suite de la description, il est question d'un procédé mis en oeuvre en vue de proposer des crevettes cuites à la vente. Il pourrait toutefois s'agir d'autres crustacés ou de coquillages.

Les crevettes sont tout d'abord pêchées. Il s'agit soit de crevettes de mer pêchées par un bateau de pêche soit de crevettes d'aquaculture. Une fois pêchées, les crevettes sont surgelées puis disposées dans des petites barquettes telle celle représentée sur les figures 2 à 4. On place alors à chaque fois trois petites barquettes dans une grande et les grandes barquettes sont empilées et disposées dans un carton d'emballage. Ces cartons d'emballage, remplis de barquettes et de crevettes, sont conservés en chambre froide à température négative et acheminés vers le lieu de cuisson des crevettes.

La figure 1 représente schématiquement une installation industrielle permettant la cuisson des crevettes. Cette installation présente un convoyeur 20 qui comporte un tapis réalisé de préférence en acier inoxydable. Ce tapis est formé de grilles assemblées les unes aux autres. Sur la figure 1, le tapis permet le convoyage d'objets de la gauche de la figure vers la droite de celle-ci.

En début de convoyeur 20, les grandes barquettes, contenant chacune trois petites barquettes, sont posées sur le tapis. Cette opération est réalisée manuellement. Toutefois il peut être envisagé de l'automatiser. La forme du rebord 6 est éventuellement adaptée de manière à faciliter la préhension des barquettes par un robot. Suivant la taille des barquettes et la largeur du tapis, une ou plusieurs barquettes peuvent se trouver de front sur le convoyeur 20.

Lorsqu'elles sont posées sur le tapis du convoyeur 20, les crevettes sont encore surgelées. Leur température est de l'ordre de -30°C. Le convoyeur les amène alors vers un premier poste de décongélation par ruissellement. Des tubes 22 s'étendent transversalement par rapport à la direction d'avancement des barquettes au-dessus du tapis du convoyeur. Ils comportent des buses orientées vers le tapis et les barquettes qui envoient de l'eau chaude, sous forme de pluie, sur les crevettes provoquant ainsi leur décongélation. L'eau de ruissellement ne s'accumule pas dans les barquettes grâce aux trous 12 réalisés au fond de celles-ci et aux grilles du tapis du convoyeur 20. Comme les trous des petites barquettes se trouvent à chaque fois face à un trou de la grande barquette qui la contient, l'écoulement de l'eau de ruissellement n'est pas gêné par la présence de deux barquettes. La décongélation des crevettes est donc uniforme et il n'y a pas de risque pour que les crevettes se trouvant au fond d'une barquette stagnent dans de l'eau chaude et commencent à cuire. L'eau qui s'égoutte à travers les trous 12 est collectée dans des bacs placés sous le tapis du convoyeur 20. Cette eau est récupérée pour être, après traitement, à nouveau injectée dans les tubes 22.

Une fois les crevettes décongelées, le convoyeur fait passer les barquettes dans un four de cuisson à la vapeur 24. La présence de perforations dans le tapis du convoyeur et la présence des trous 12 dans les barquettes permet de réaliser une cuisson homogène des crevettes.

A la sortie du four de cuisson 24, les crevettes sont rincées à l'eau claire et refroidies à l'aide d'une saumure. Le dispositif d'aspersion de cette eau claire et de cette saumure sur les crevettes est semblable au dispositif utilisé pour décongeler les crevettes, la différence résidant ici essentiellement dans le produit pulvérisé.

En fin de convoyeur, chaque petite barquette peut être pesée à l'aide d'une balance 26 symbolisée sur la figure 1 pour être par la suite emballée sous atmosphère contrôlée favorisant une bonne conservation des crevettes. La périphérie du rebord 6 a alors avantageusement une forme repliée pour augmenter la rigidité de la barquette et éviter sa déformation au cours de cette étape d'emballage. Les crevettes ainsi emballées peuvent être remises en carton et portées sur le lieu de vente. Ainsi emballées et étiquetées, les barquettes peuvent être disposées dans un rayon libre service d'un supermarché ou hypermarché. Bien entendu, de telles barquettes peuvent être commercialisées dans d'autres points de vente tels par exemple une poissonnerie.

Le procédé décrit ci-dessus présente de nombreux avantages par rapport aux procédés habituellement mis en oeuvre pour cuire des crevettes.

La même barquette étant utilisée pour les crevettes depuis le point de pêche jusqu'au point de vente, aucun problème de recyclage ne se pose. Les cartons d'emballage des barquettes peuvent être réutilisés ou recyclés.

Le nombre de manipulations est restreint. Les crevettes sont mises une fois pour toutes dans leur barquette sur leur lieu de pêche. Il est par la suite inutile de les manipuler pour les verser sur un tapis de convoyage, de même qu'il est inutile de les remanipuler en fin de tapis de convoyage pour les disposer dans une barquette ou caissette. Lorsqu'il s'agit de crevettes, il n'y a alors pas de problèmes en fin de cuisson pour bien ranger les antennes qui ont souvent tendance à dépasser de l'emballage.

Le procédé décrit ci-dessus permet également d'obtenir une excellente traçabilité du produit. En effet, les barquettes peuvent être marquées chacune d'une référence propre (code barres ou autre) permettant ainsi de suivre le produit d'un bout à l'autre de la chaîne allant du point de pêche au point de vente.

L'absence de manipulation permet également de plus facilement garantir l'hygiène du produit tout au long de la chaîne de traitement.

La présente invention ne se limite pas à la forme de réalisation de l'emballage décrite ci-dessus ni à la forme de réalisation du procédé décrit. L'invention concerne également les variantes de cet emballage et de ce procédé à la portée de l'homme du métier dans le cadre des revendications ci-après.

Ainsi, les formes de la barquette, de sa paroi, de son fond, de ses reliefs, etc... peuvent être fort différentes de ce qui est représenté au dessin et décrit plus haut. Le fait d'avoir une barquette gerbable dans une orientation et empilable dans une autre est optionnel.

De nombreuses variantes peuvent être envisagées pour le procédé de cuisson. On peut envisager de décongeler les crevettes, ou bien de les faire cuire, en utilisant des fours à micro-ondes. La décongélation, de même que la cuisson, peuvent être réalisée à l'aide de vapeur, d'eau chaude ou tout autre moyen connu de l'homme du métier.

L'emballage en fin de procédé est bien entendu optionnel, par exemple dans le cas où les barquettes sont de grandes dimensions et que les produits sont destinés à être commercialisés en vrac.

L'étape de pesage en fin de cuisson peut par exemple consister en une pesée pondérale. Dans ce cas, on élimine les barquettes dont le poids n'est pas compris dans une plage prédéterminée. On peut aussi prévoir uniquement une pesée lors du conditionnement des crevettes ou autres. A un poids donné de crevettes (ou autres) fraîches correspond alors un poids connu de crevettes (ou autres) cuites.

Le procédé selon l'invention est également parfaitement adapté à l'utilisation de barquettes d'une seule taille. Le fait de prévoir de grandes barquettes en contenant de plus petites est avantageux mais pas essentiel dans l'invention. La taille des grandes barquettes est donnée ici à titre d'exemple. Au lieu de contenir trois petites barquettes, une grande barquette pourrait contenir deux ou quatre ou tout autre nombre de petites barquettes. Dans le cas par exemple d'une grande barquette contenant quatre petites barquettes, les petites barquettes ne sont pas forcément alignées dans la grande barquette mais peuvent aussi par exemple être disposées en carré.

Il peut aussi exister des barquettes de tailles différentes sans pour autant que les petites barquettes prennent place dans des barquettes plus grandes. En effet, il est possible de prévoir des conditionnements de tailles différentes pour des ventes de barquettes de produits de poids différents.

Les barquettes de grande taille sont de préférence réalisées dans un même matériau que les barquettes de petite taille mais il peut être envisagé d'utiliser des matériaux différents. Il importe seulement d'avoir un matériau résistant sans se déformer à de fortes variations de température et de préférence présentant une assez grande rigidité pour faciliter les manipulations.

## Revendications

1. Procédé de traitement de crustacés et/ou de coquillages en vue de leur cuisson, à partir de crustacés et/ou coquillages pêchés et surgelés, dans lequel les crustacés et/ou coquillages sont pêchés, conditionnés et surgelés puis ultérieurement décongelés, cuits et rincés,
**caractérisé en ce que** les crustacés et/ou coquillages sont conditionnés dans un emballage perforé ou similaire résistant à la fois aux basses températures et aux hautes températures subies par les crustacés et/ou coquillages et **en ce que** les crustacés et/ou coquillages restent dans leur emballage au cours de leur cuisson.

2. Procédé de traitement selon la revendication 1, **caractérisé en ce que** l'emballage ou similaire dans lequel les crustacés et/ou coquillages pêchés sont conditionnés et cuits est aussi utilisé pour la distribution et la vente au consommateur de ces produits.

3. Procédé de traitement selon l'une des revendications 1 ou 2, **caractérisé en ce que** la décongélation et la cuisson des crustacés et/ou coquillages sont réalisées par un procédé de cuisson choisi dans l'ensemble des procédés contenant le ruissellement d'eau chaude (22), le passage dans un four à vapeur (24), le passage dans une cellule de pulvérisation d'un fluide thermique sous forme gazeuse et/ou liquide et le passage dans un four à micro-ondes.

4. Procédé de traitement selon l'une des revendications 1 à 3, **caractérisé en ce que** les emballages sont placés sur un tapis de convoyeur (20) ajouré.

5. Procédé de traitement selon l'une des revendications 1 à 4, **caractérisé en ce qu'**après la cuisson, les crustacés et/ou coquillages sont refroidis par aspersion d'une saumure (22).

6. Procédé de traitement selon l'une des revendications 1 à 5, **caractérisé en ce qu'**il comporte en outre une étape de pesage (26) des crustacés et/ou coquillages cuits et refroidis et une étape d'emballage sous atmosphère contrôlée dans un étui en matière synthétique.

7. Barquette destinée à contenir des crustacés et/ou coquillages comportant un fond (2) et une paroi latérale (4) s'étendant à la périphérie de celui-ci, le fond (2) étant muni de reliefs (8, 10) de telle sorte que le fond (2) présente des zones en relief et des zones en creux, et des trous (12) étant réalisés dans la majorité des zones en creux du fond (2), **caractérisée en ce qu'**elle est réalisée dans une matière synthétique pouvant passer de -20°C à +70°C ou inversement sans déformation sensible.

8. Barquette selon la revendication 7, **caractérisée en ce qu'**elle est réalisée en polypropylène rigide.

9. Barquette selon l'une des revendications 7 ou 8, **caractérisée en ce que** la paroi latérale (4) présente à son extrémité libre opposée au fond un rebord (6) s'étendant dans un plan sensiblement parallèle au fond (2).

10. Barquette selon l'une des revendications 7 à 9, **caractérisée en ce qu'**en vue de dessus, la barquette présente une forme rectangulaire avec deux axes médians perpendiculaires (16, 18), et **en ce que** la barquette est symétrique par rapport à l'un (16) des axes médians mais pas par rapport à l'autre axe médian (18).

11. Barquette selon l'une des revendications 7 à 10, **caractérisée en ce que** le motif formé par les zones en relief et les zones en creux est sensiblement la répétition plusieurs fois d'un même motif unitaire.

12. Ensemble de barquettes, **caractérisé en ce qu'**une première barquette est une barquette selon la revendication 11, **en ce que** les autres barquettes sont des barquettes selon l'une des revendications 7 à 10 dont le motif formé par les zones en relief et les zones en creux correspond sensiblement au motif unitaire de la première barquette, et **en ce que** les trous (12) réalisés dans les zones en creux du fond (2) de la première barquette coïncident avec les trous (12) en creux des autres barquettes lorsque celles-ci prennent place dans la première barquette.
